# EUROPEAN PATENT APPLICATION

(11) **EP 3 593 927 A1**
(43) Date of publication of application: **15.01.2020**
(21) Application number: 19179569.9
(22) Date of filing: 12.06.2019
(51) Int. Cl.: B22F 3/12, B22F 3/15, B22F 3/24, B22F 5/10, B22F 3/04

(54) **FABRICATING HOLLOW COMPONENTS**

(30) Priority: 12.07.2018 GB 201811430
(71) Applicant: Rolls-Royce plc, London SW1E 6AT (GB)
(72) Inventor: Clark, Daniel, Derby, Derbyshire DE24 8BJ (GB); Rawson, Martin, Derby, Derbyshire DE24 8BJ (GB); Pardoe, Alan, Derby, Derbyshire DE24 8BJ (GB)
(74) Representative: Rolls-Royce plc

(57) **Abstract**

The present disclosure relates to methods of fabricating components having an internal void using powder compaction and consolidation. Example embodiments include a method of fabricating a component (801) having an internal void (804), the method comprising the steps of: i) providing a core (401) having a shape corresponding to the internal void (804) of the component (801); ii) compacting a powder (601) around the core (401) to form a compacted powder body around the core (401); iii) removing the core (401); and iv) heating the compacted powder body to consolidate the compacted powder body.

## Description

The present disclosure relates to methods of fabricating components having an internal void using powder compaction and consolidation.

Hollow components that need to withstand substantial and repeated stresses, such as bearing cages, journal bearings or torque carriers, are conventionally fabricated from solid blocks of material, typically metal. This involves substantial machining to form the external and internal features of the component. For larger sized components particularly, extensive machining to create a large void within the component can add substantial cost and complexity to the manufacturing process, as well as being wasteful of material. In some applications, such as epicyclic gearbox torque carriers for geared turbofan aircraft engines, the hollow component may need to have dimensions of the order of 1m or more, making machining processes extensive and costly. Improved and more efficient processes for making such components would therefore be beneficial.

Applications such as in automotive, marine or aerospace tend to require high performance materials with a uniform structure and minimum defects, which is preferably achieved by creating the component as a unitary body with no joints. For high performance material applications where uniformity is of greater importance, powder metallurgy may be used to form the component, followed by machining. A general problem therefore is how to reduce any such machining to a minimum.

According to a first aspect there is provided a method of fabricating a component having an internal void, the method comprising the steps of:
i) providing a core having a shape corresponding to the internal void of the component;
ii) compacting a powder around the core to form a compacted powder body around the core;
iii) removing the core; and
iv) heating the compacted powder body to consolidate the compacted powder body.

The use of a core to define the shape of the internal void of the component substantially reduces the amount of machining that would otherwise be required for fabricating such a component.

The core may be removed from the compacted powder body before or during the process of consolidating the powder body through heating. The core may for example be volatilised during an initial heating stage prior to full consolidation of the powder body. The core may alternatively be removed prior to the heating stage, for example by dissolving or disintegrating the core.

The method may comprise assembling one or more pre-compacted pieces of the component in or around the core prior to compacting the powder around the core and the pre-compacted pieces to form the compacted powder body. This has the advantage of allowing for more complex geometries to be created that would otherwise not be possible using compaction of a loose powder alone due to limited flow possible during powder compaction.

The core may comprise tooling configured to hold the core in position relative to the compacted powder body during the step of compacting the powder around the core. This tooling may be removable prior to removing the core, for example by mechanically removing the tooling rather than by melting or volatilising.

Step iii) may comprise heating the compacted powder body to melt or volatilise the core.

Step ii) may comprise applying isostatic pressure to form the compacted powder body. For example, the compacted powder body may be formed by cold isostatic pressing of the powder.

The method may comprise a subsequent step v) of hot isostatic pressing the consolidated powder body to densify the component.

The core may comprise an internal volume and a passage extending from the internal volume to an external surface of the compacted powder body, wherein step ii) comprises applying isostatic pressure to the powder via a fluid surrounding the powder body and extending within the internal volume. This reduces the amount of material used to form the core, and allows isostatic pressure to be applied from within the internal void as well as from external to the component, thereby improving the uniformity of the compacted powder body. The core may be defined by an inner elastomeric container, with the powder contained within an outer container. The passage may be provided between an outer surface of the outer container and an inner surface of the inner container to allow for pressure applied to the fluid to be transmitted through to the internal volume within the core. The inner and outer containers may be composed of an elastomeric material such as a rubber, and may be formed by a three dimensional printing technique such as stereolithography. An advantage of using a flexible bag for defining the shape of the compacted powder body is that draft angles are not required to allow for removal of the core after compaction, which would otherwise be the case when using hard tooling for example. A further advantage is that pre-compacted portions of the powder body may be placed in position within the internal volume between the inner and outer containers, or bags, prior to introduction of the remaining powder before compaction.

The component may be a torque carrier for an epicyclic gearbox.

The powder may be a metallic powder, for example a steel.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a schematic diagram of an example core within a powder body;
**Figure 2** is a schematic diagram of an example core with a central cylindrical insert;
**Figure 3** is a schematic cross-sectional diagram of an example assembly for forming a central void within a compacted powder body;
**Figure 4** is a schematic diagram of an example core with additional features for forming cavities in the powder body;
**Figure 5** is a schematic diagram of the example core of Figure 4 with additional pre-compacted features;
**Figure 6** is a schematic diagram of the example core of Figure 5 within a powder body;
**Figure 7** is a schematic diagram of the example core of Figure 6 with the powder body held in position by supporting rings;
**Figure 8** is a schematic diagram of a component following removal of the core and consolidation; and
**Figure 9** is a schematic flow diagram of an example process for fabricating a component having an internal void.

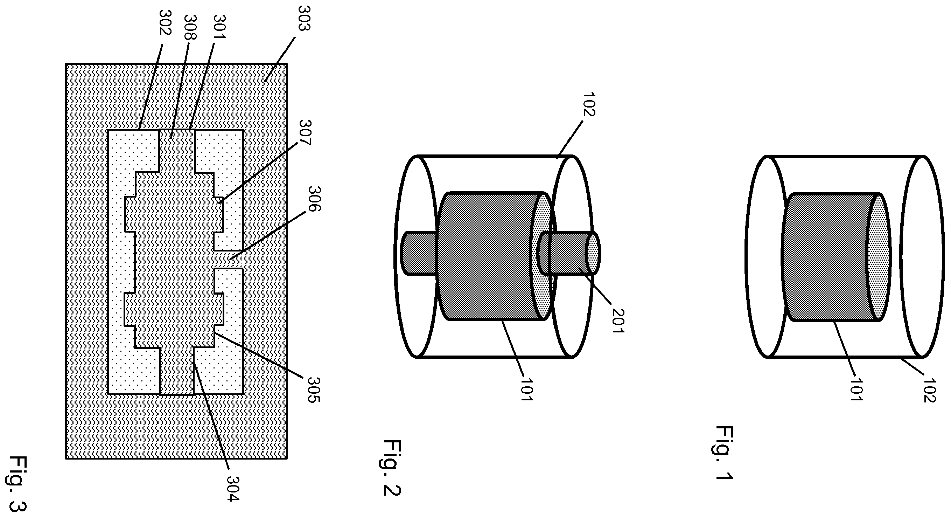

Figure 1 illustrates a schematic diagram of a simple form of core 101 within a compacted powder body 102 (conventionally termed a green body) prior to consolidation by heating. The core is in the form of a negative of a desired void to be formed within the final consolidated component, and is therefore designed to take into account shrinkage of the component during consolidation, i.e. being larger than the ultimate size of the void. The material the core 101 is preferably substantially incompressible under isostatic pressure and not friable, so that the shape of the core 101 is maintained during compaction of the surrounding powder body 102. The core also needs to be composed of a material that can be removed from the powder body 102 prior to consolidation, for example through volatilisation, melting or disintegration. A suitable material is ammonium bicarbonate or polymethyl methacrylate (PMMA, also known as Perspex (RTM)), or a mixture of the two, both of which can be removed completely by volatilisation in a heating process prior to consolidation of the powder body through sintering. Removal of the core material may for example be done in a bake-out station, which may incorporate a heat-exchanging media recycling unit to reduce waste heat and emissions. Alternative materials for the core 101 may be soluble or meltable salts, carbamide (urea) or sugar.

The core 101 will require supporting within the powder body before and during the process of introducing and compacting powder around the core 101. In the example illustrated in Figure 2, tooling in the form of a cylindrical component 201 is provided, which extends through the core 101 and provides support for the core 101. The component 201 may be the same or similar type of material as the core 101, which can be removed by melting, volatilisation or disintegration, or may be in the form of tooling that can be mechanically removed prior to removal of the core 101.

To compact the powder to make a compacted powder body, isostatic pressing is preferably used (cold isostatic pressing for example). Figure 3 illustrates in cross-section an example assembly comprising a powder body 301 to be isostatically pressed. The powder body 301 is contained within an outer container or bag 302, which is immersed in a fluid 303, and an inner container or bag 304 that defines an internal core of the powder body 301. The core 304 comprises an internal volume 305 and a passage 306 extending from the internal volume 305 to an external surface of the powder body 301. Isostatic pressure is applied to the powder body 301 by pressurising the fluid 303, thereby compacting the powder body 301. The inner and outer bags 304, 302 defining the core and the outer shape of the powder body 301 may be formed of an elastomeric material such as a rubber, and may be formed by a three dimensional printing technique such as stereolithography of a flexible silicone rubber compound. The inner bag 304 may comprise features that define internal features such as recesses 307 around the core or passageways 308 through the powder body. Using an elastomeric material, rather than a solid incompressible material, to define the core in this way has the advantage of a more uniform pressure being applied across the thickness of the compacted powder body, and with the ability to form more complex surface features without the need for including draft angles to allow for removal of the tool, but at the expense of reduced tolerances on the compacted powder body. Some features, for example those requiring tighter tolerances, may be provided using hard tooling in combination with the flexible tooling provided by the inner and outer bags 304, 302. The inner bag 304 may be removed physically from the compacted powder body after isostatic pressing, for example by cutting the inner and outer bags 304, 302 away from the powder body 301 prior to heat treatment to consolidate the compacted powder body 301. The inner and outer bags 304, 302 may be formed with weakened points or cut lines that allow the bags to be separated and removed from the compacted powder body following pressing. An inlet in the outer bag 302 allows for powder to be introduced into the volume between the bags prior to compaction, following which the inlet is sealed, preferably under vacuum.

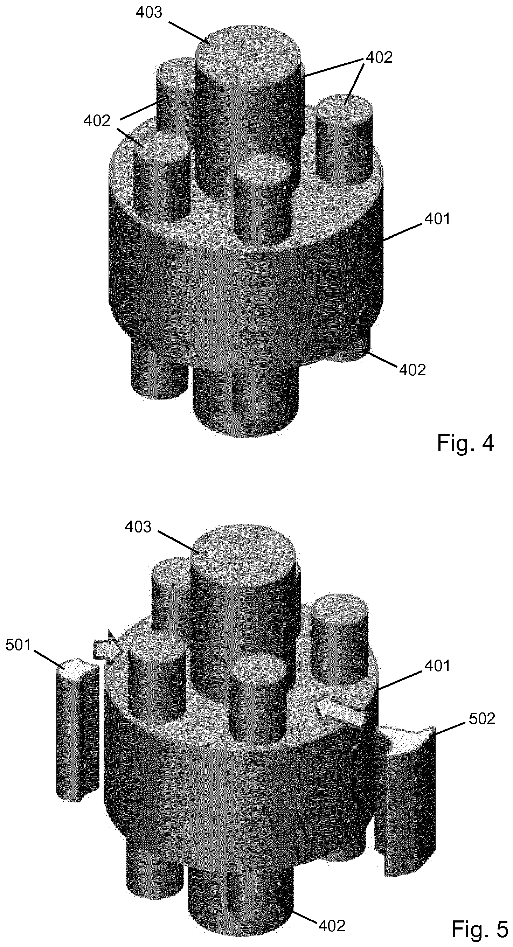

The core may comprise further components designed to extend into or through the powder body to form pockets or passages through the compacted powder body, as illustrated in Figure 4. In this example, the core 401 comprises a number of extensions 402 above and below a central portion of the core 401, the extensions forming cylindrical passages through the compacted powder body, which may in the finished product retain bearings for rotating components of a gearbox. A central cylindrical portion 403 of the core may be composed of the same or similar material or may alternatively be formed of a different material that is releasable from the compacted powder body and removed from the core 401 prior to heating and consolidation.

Depending on the complexity of the shape of the core, one or more pre-compacted powder components may need to be added prior to compaction of powder around the core 401. This is because compaction under isostatic pressure may not allow for powder flow sufficient to achieve uniform compaction around a shape of the kind shown in Figure 4. To address this problem, pre-compacted pieces of the component may be provided in or around the core prior to compacting the powder around the core and the pre-compacted pieces to form the compacted powder body. This is shown schematically in Figure 5, in which pre-compacted powder pieces 501, 502 are to be inserted in spaces between portions of the core 401 where powder flow would not be sufficient during isostatic pressing. A more complex three dimensional shape may therefore be formed using pre-compacted portions joined together with isostatically pressed powder. The pre-compacted pieces 501, 502 may be composed of a similar or different material as that making up the rest of the compacted powder body.

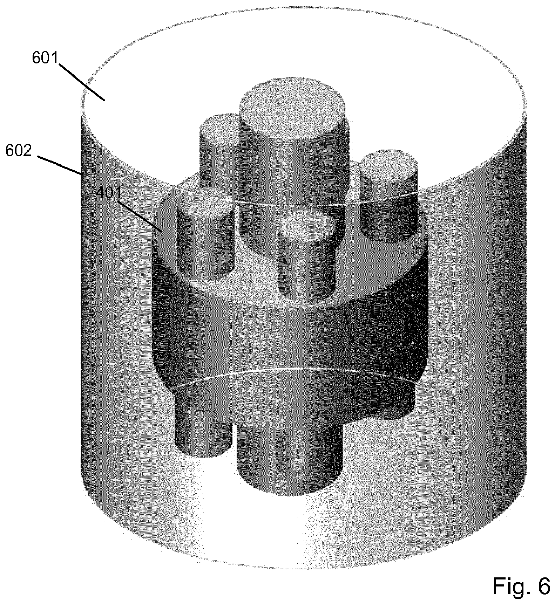

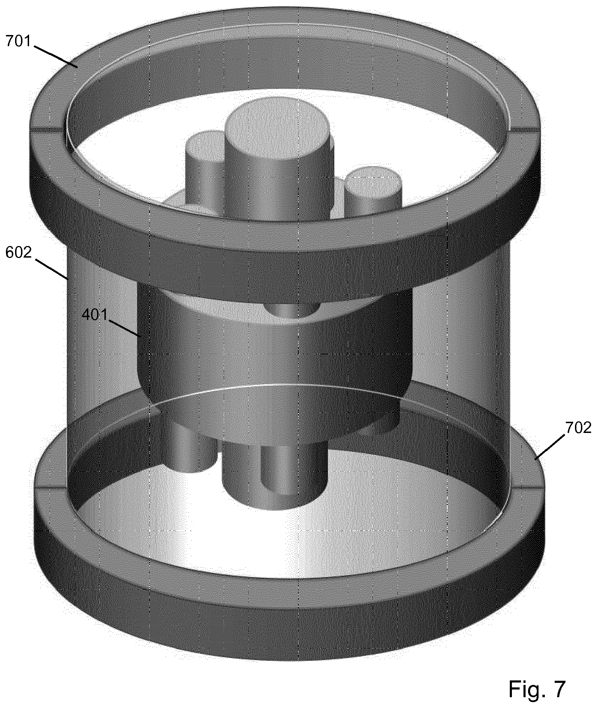

Figure 6 illustrates the core 401 within a powder body 601, which is contained within a flexible enclosure such as a bag 602 to allow isostatic pressure to be applied around the powder body 601. The bag 602 may be selectively stiffened to retain a desired shape, for example using support structures such as one or more rings 701,702, as shown in Figure 7. The support structures are arranged so as to minimise their effect on isostatic pressure applied to the powder body. In the example shown in Figure 7, the support rings 701, 702 are provided at opposing ends of the bag 602, their primary purpose to resist slumping of the bag before and during isostatic pressing.

Following compaction of the powder body, the compacted powder body is removed from the isostatic pressing bag and subjected to an initial heating cycle to remove the core material, together with any binder present compacted powder body. The resulting form is fragile and may require mechanical support during sintering to prevent slumping. Such support may for example be in the form of a coarse ceramic powder, a foam structure or a latticework support, which may be provided within the core and remains within the body during the subsequent sintering stage.

Following removal of the core, the powder body is subjected to heating to cause the powder body to consolidate through sintering. For a metallic component, this may be carried out under vacuum to prevent oxidation of the metal and to allow pores between the metallic powder particles to be removed. In an example process, electrical field assisted sintering may be used, under a pressure of less than 10mPa. A further hot isostatic pressing (HIP) process may be added to further densify the resulting component and reduce or remove any residual porosity.

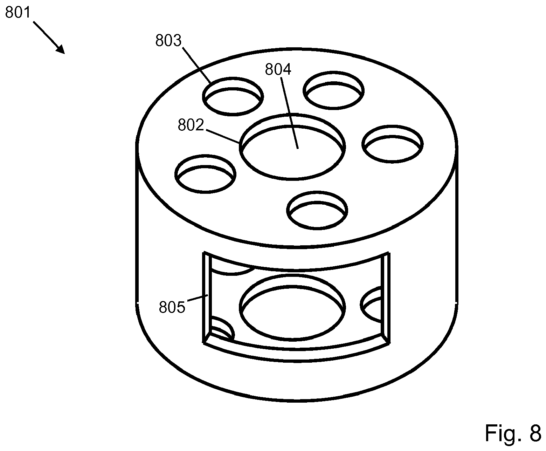

Figure 8 illustrates schematically an example of a component 801 after consolidation. The component 801 is in the form of a torque carrier for an epicyclic gearbox. A central hole 802 extending through the component 801 is provided for connecting a shaft, and a plurality of holes 803 surrounding the central hole 802 allow for bearings to be mounts to the component 801 for attachment of planetary gears within a central void 804 within the component. The component 801 preferably comprises one or more further openings 805 in the side of the component 801 to allow for introduction of, and access to, the internal components (not shown) and for machining of internal surfaces.

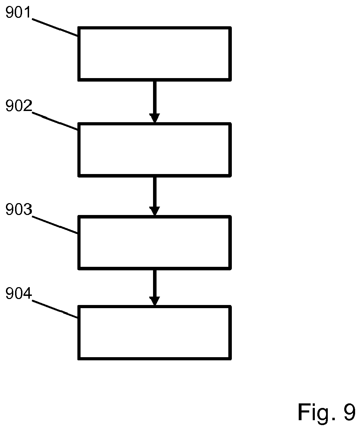

Figure 9 illustrates an example process for performing a method of fabricating a component having an internal void. In a first step 901, a core is provided having a shape corresponding to the internal void of the component. In a second step 902, powder is compacted around the core to form a compacted powder body around the core. In a third step 903, the core is removed, for example by volatilisation through heating. Other parts of the core may be removed in other ways, for example by being mechanically removed prior to heating. In a fourth step 904, the compacted powder body is heated to consolidate the compacted powder body. Further steps may include machining of the consolidated body and optionally a hot isostatic pressing step to further consolidate the body.

It will be understood that the invention is not limited to the embodiments above-described and various modifications and improvements can be made without departing from the concepts herein. Except where mutually exclusive, any of the features may be employed separately or in combination with any other features and the disclosure extends to and includes all combinations and sub-combinations of one or more features described herein.

## Claims

1. A method of fabricating a component (801) having an internal void (804), the method comprising the steps of:
i) providing a core (401) having a shape corresponding to the internal void (804) of the component (801);
ii) compacting a powder around the core (401) to form a compacted powder body around the core;
iii) removing the core (401); and
iv) heating the compacted powder body to consolidate the compacted powder body.

2. The method of claim 1 comprising assembling one or more pre-compacted pieces (501, 502) of the component in or around the core (401) prior to compacting the powder around the core (401) and the pre-compacted pieces (501, 502) to form the compacted powder body.

3. The method of claim 1 or claim 2 wherein the core (401) comprises tooling configured to hold the core in position relative to the compacted powder body during the step of compacting the powder around the core (401).

4. The method of claim 3 comprising removing the tooling prior to removing the core (401).

5. The method of any preceding claim wherein step iii) comprises heating the compacted powder body to melt or volatilise the core (401).

6. The method of any preceding claim wherein step ii) comprises applying isostatic pressure to form the compacted powder body.

7. The method of claim 6, wherein the compacted powder body is formed by cold isostatic pressing of the powder.

8. The method of any preceding claim comprising a subsequent step v) of hot isostatic pressing the consolidated powder body to densify the component.

9. The method of any preceding claim wherein the core comprises an internal volume (305) and a passage (306) extending from the internal volume (305) to an external surface of the powder body (301), wherein step ii) comprises applying isostatic pressure to the powder via a fluid (303) surrounding the powder body (301) and extending within the internal volume (305).

10. The method of claim 9 wherein the core is defined by an inner elastomeric container (304) and the powder is contained within an outer container (302).

11. The method of any preceding claim wherein the component (801) is a torque carrier for an epicyclic gearbox.

12. The method of any preceding claim wherein the powder is metallic.
